# EUROPEAN PATENT SPECIFICATION

(11) **EP 4 537 320 B1**
(45) Date of publication and mention of the grant of the patent: **29.07.2026**
(21) Application number: 23738299.9
(22) Date of filing: 07.06.2023
(51) Int. Cl.: G08B 25/01, G08B 25/14

(54) **METHOD FOR IMPROVING RESPONSIVENESS OF A SECURITY SYSTEM**
VERFAHREN ZUR VERBESSERUNG DER ANSPRECHEMPFINDLICHKEIT EINES SICHERHEITSSYSTEMS
PROCÉDÉ D'AMÉLIORATION DE LA RÉACTIVITÉ D'UN SYSTÈME DE SÉCURITÉ

(30) Priority: 10.06.2022 US 202263351080 P
(43) Date of publication of application: 16.04.2025
(73) Proprietor: Resideo LLC, Wilmington, DE 19808 (US)
(72) Inventor: HUANG, Wenjun, Golden Valley, Minnesota 55422 (US); WU, Xuemei, Golden Valley, Minnesota 55422 (US); SHI, Barry, Golden Valley, Minnesota 55422 (US)
(74) Representative: Murgitroyd & Company
(86) International application number: PCT/US2023/024682
(87) International publication number: WO 2023/239771

(56) References cited:
- EP-A1- 2 983 148
- EP-A2- 3 588 455
- US-A1- 2021 153 818

## Description

### RELATED APPLICATION

This application claims priority to U.S. Provisional Application No. 63/351,080 filed June 10, 2022.

### TECHNICAL FIELD

The present invention generally relates to a method for improving responsiveness of a security system, and in particular a method for quickly and reliably establishing two-way audio communication between a user and a human operator of the security system.

### BACKGROUND

Security systems are widely used in residential, commercial, industrial, and military properties to protect against burglary (theft), property damage, as well as personal medical emergencies. An existing security system typically comprises a control panel, one or more sensors, one or more audio devices, and a remote server (e.g., a remote control center). Both of the sensors and audio devices are communicatively coupled to the control panel. Often, the control panel comprises an integrated audio device configured to enable audio input and output or two-way audio communication.

In response to an emergency event (e.g., an intrusion or a fire), an existing security system will try to establish a two-way audio communication session between a user at the premise at which the emergency event occurred and a human operator at a remote control center. In the case of multiple audio devices being installed at different locations in the premise, the security system will need to identify which audio device should be connected to the remote control center so as to establish audio communication between the user and the operator. This is typically achieved by connecting, via the control panel, each of the audio devices to the remote control center in a sequential manner.

EP3588455A2 relates to a monitoring system for identifying a location of a person in a building.

EP2983148A1 relates to a sound sensitive two-way emergency alert system.

In a non claimed example implementation, the security system performs the following four steps.

Step 1: The control panel first establishes a two-way audio communication session (e.g., a voice call) with a remote control center. Once established, the control panel is able to receive an audio data stream (e.g., generated by the human operator) from the remote control center. The establishment of the two-way audio communication session takes about 5 seconds.

Step 2: The control panel then tries to connect a first audio device installed at a first location in the premise to the established audio communication session such that the first audio device and the remote control center are communicatively coupled. To achieve this, the control panel relays the audio data stream received from the remote control center to the first audio device and waits for a response (e.g., an audio data stream generated by the user) from the first audio device. The waiting time is about 15 seconds.

Step 3: In the case where no response has been received from the first audio device within the aforementioned waiting time, the remote control center generates and transmits a switching signal to the control panel. Such a switching signal is often generated manually by a human operator (e.g., by manually pressing a button). Upon receiving such a switching signal, the control panel disconnects the first audio device and then connects to a second audio device installed at a second location in the premise to the established audio communication session with the remote control center such that the second audio device and the remote control center are communicatively coupled. It takes about 3 seconds from the generation of a switching signal to the connection of the second audio device. After switching to the second audio device, the security system will repeat step 2 in order to communicatively couple the second audio device and the remote control center together.

The security system may repeat steps 2 and 3 multiple times until it identifies an audio device from which a response is received. The control panel relays the response from the audio device to the remote control center and as such a two-way audio communication session is successfully established between the identified audio device and the remote control center the security system. The security system then progresses to step 4.

Step 4: The human operator talks to the user via the established two-way audio communication session to find out what has happened at the premise and takes appropriate actions according to the information provided by the user.

Therefore, for an existing security system having for example four audio devices (e.g., a first, second, third and fourth device) each installed at a different location of the premise, the response time of the security system to an emergency event varies between 5 seconds (e.g., in the case where a response is received from the first audio device) and 74 seconds (e.g., in the case where a response is received from the last audio device, i.e. the fourth audio device). Here, the response time is defined as time between the moment of detecting the emergency event and the moment of establishing an audio communication session between the user and the operator. The variable and potentially long response time of existing security systems causes uncertainties in responding to emergency events and results in an increased risk of property damage and/or personal injury.

Objects and aspects of the present claimed invention seek to alleviate at least these problems with the prior art.

### SUMMARY

According to a first aspect of the present invention, as claimed in claim 1, there is provided a security system for monitoring premises, comprising: a plurality of audio devices installed at two or more different locations of the premises; a control panel communicatively coupled to each of the audio devices; and a remote server configured for two-way audio communication with the control panel and each of the audio devices; wherein in response to an emergency detected by or notified to the control panel, the system is configured to: establish, by the control panel, a two-way audio communication session with the remote server; establish, by the control panel, a two-way audio communication session with each of the plurality of audio devices; transmit, by each of the audio devices to the control panel, an audio data stream; identify, by the control panel, in response to the audio data stream from each of the audio devices, the audio device at which human voice is detected; and connect, by the control panel, the identified audio device to the remote server so as to enable two-way audio communication between the identified audio device and the remote server.

According to a second aspect of the present invention, as claimed in claim 8, there is provided a method of operating a security system for monitoring premises, wherein the system comprises: a plurality of audio devices installed at two or more different locations of the premises; a control panel communicatively coupled to each of the audio devices; and a remote server configured for two-way audio communication with the control panel and each of the audio devices; and wherein the method comprises: in response to an emergency detected by or notified to the control panel: establishing, by the control panel, a two-way audio communication session with the remote server; establishing, by the control panel, a two-way audio communication session with each of the plurality of audio devices; transmitting, by each of the audio devices to the control panel, an audio data stream; identifying, by the control panel, in response to the audio data stream from each of the audio devices, the audio device at which human voice is detected; and connecting, by the control panel, the identified audio device to the remote server so as to enable two-way audio communication between the identified audio device and the remote server.

### BRIEF DESCRIPTION OF THE DRAWINGS

Embodiments of the present invention will now be described by way of example only and with reference to the accompanying drawings, in which:
Figure 1 depicts schematically a functional block diagram of a security system in accordance with an embodiment;
Figure 2 shows a flow diagram of a method of improving the responsiveness of a security system (e.g., as shown in Figure 1) in accordance with an embodiment; and
Figures 3A-3C depict schematically an example working flow of a security system (e.g., as shown in Figure 1) in response to an emergency event.

### DETAILED DESCRIPTION OF THE EMBODIMENTS

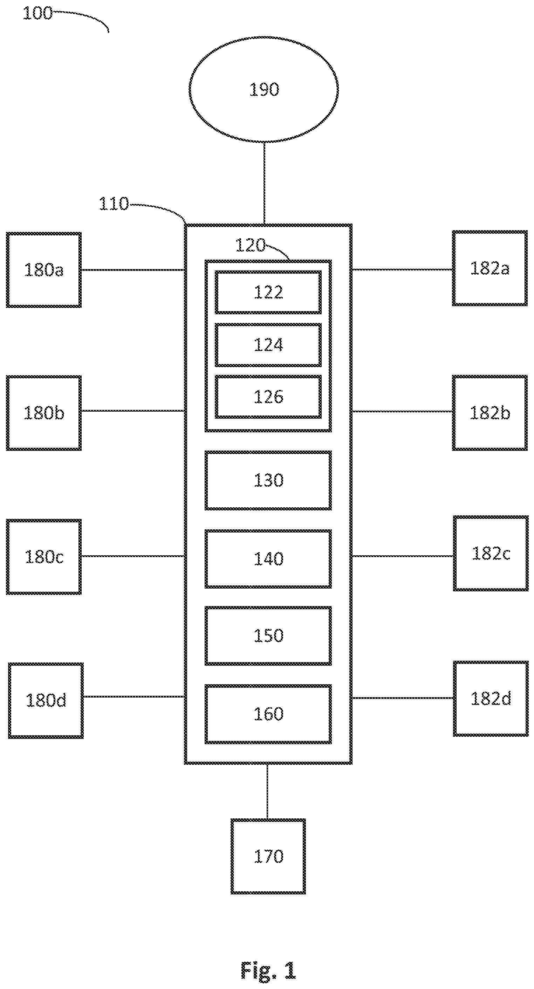

Figures 1 to 3 are related to embodiments of a security system for monitoring premises, comprising: a plurality of audio devices installed at two or more different locations of the premises; a control panel communicatively coupled to each of the audio devices; and a remote server configured for two-way audio communication with the control panel and each of the audio devices; wherein in response to an emergency detected by or notified to the control panel, the system is configured to: establish, by the control panel, a two-way audio communication session with the remote server; establish, by the control panel, a two-way audio communication session with each of the plurality of audio devices; transmit, by each of the audio devices to the control panel, an audio data stream; identify, by the control panel, in response to the audio data stream from each of the audio devices, the audio device at which human voice is detected; and connect, by the control panel, the identified audio device to the remote server so as to enable two-way audio communication between the identified audio device and the remote server.

With reference to Figure 1, the security system 100 may comprise a control panel 110, one or more emergency triggering mechanisms 180a-180d, one or more audio devices 182a-182d, a siren 170, and a remote server 190. The control panel 110 may be communicatively coupled to the components (e.g., the emergency triggering mechanisms 180a-180d, the audio devices 182a-182d, the siren 170 and the remote server 190) of the security system 100 via a wired or wireless path. In an embodiment, the control panel 110 may be communicatively coupled to the remote server 190 (e.g., a central control center) via a data network (e.g., the internet) in a wired or wireless manner. In some cases, the remote server 190 may act as a central control center responsible for monitoring and controlling a plurality of security systems 100 in a certain area.

The one or more emergency triggering mechanisms 180a-180d may comprise one or more sensors commonly used in a home or business security system, which may include, for example, one or more motion sensors 180a for detecting when a person enters a room, one or more fire sensors 180b for indicating that a fire has been detected, one or more window and door 180c sensors for indicating that a window or door has been opened, and one or more emergency indicators 180d. The one or more emergency indicators 180d may be each actuatable by a user in the premise in response to a medical emergency. Alternatively or in addition, the emergency indicators 180d may be for example a set of sensors configured to detect that a user is lying on the floor motionless for more than a threshold period of time. Alternatively or in addition, other types of sensors (not shown in Figure 1), such as shock sensors for detecting a shock that occurs when a burglar strikes the door or window with a hard object, may also be employed as the emergency triggering mechanisms.

Each of the one or more audio devices 182a-182d may comprise one or more electroacoustic transducers that are configured to enable two-way audio communication. In an embodiment, each audio device 182a-182d may comprise a first electroacoustic transducer (e.g., a microphone) configured to convert sound into an electrical audio signal and a second electroacoustic transducer configured to convert an electrical audio signal to sound. In an embodiment, each audio device 182a-182d may comprise a single electroacoustic transducer that is able to convert sound into an electrical audio signal as well as to convert an electrical audio signal to sound. In an embodiment, at least one of the audio devices 182a-182d may be integrated in an emergency triggering mechanism 180a-180d such that the emergency triggering mechanism not only generates and transmits an emergency signal to the control panel 110 in response to an emergency event but also enables two-way communication with the control panel 110 and the remote server 190 (via the control panel 110). In an embodiment, each of the audio devices 182a-182d may be integrated in one emergency triggering mechanism 180a-180d. In such a case, no separate audio devices are required.

The control panel 110 may be configured to receive, process and transmit signals. To provide such functionalities, the control panel 110 may comprise a processing unit 130 (e.g., a microprocessor) for processing information (e.g., signals received from the components or devices of the security system 100 and the remote server 190 where available), a memory unit 140 (e.g., non-transient memory) for storing data (e.g., system information and control programs), a power unit 150 for powering the components of the control panel 110, and a communication unit 160 (e.g., a transceiver) for receiving signals from and transmitting signals to the components or devices of the security system 100 and the remote server 190 where available.

The control panel 110 may further be configured to provide a user interface between the human user and the security system 100. As can be seen in Figure 1, the user interfacing functionalities may be provided by an integrated user interface unit 120 comprised in the control panel 110. In an embodiment, the user interface unit 120 may comprise an image sensor 122 (e.g., a digital camera), an electronic visual display 124 (e.g., a LCD backlit by LEDs) and a key pad 126. The user interface unit 120 may be used to arm and disarm the security system 100. The image sensor 122 may be used to capture images of the user whenever the user tries to change a setting of the control panel 110, e.g., to arm and disarm the security system 100. Each image may be formed by a plurality of image pixels and may be used for example to verify whether the user is authorized to make such a change. In addition, the image sensor 122 may be configured to monitor an ambient environment of the control panel 110.

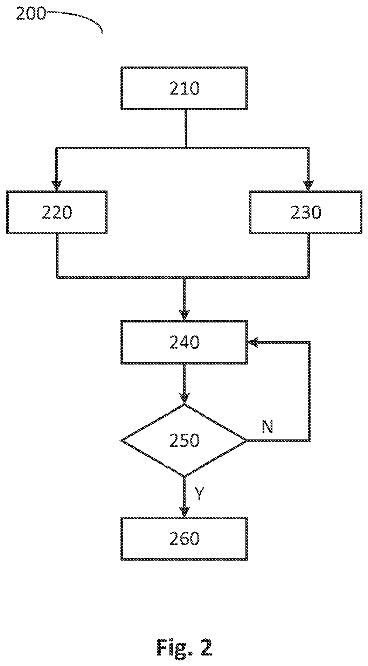

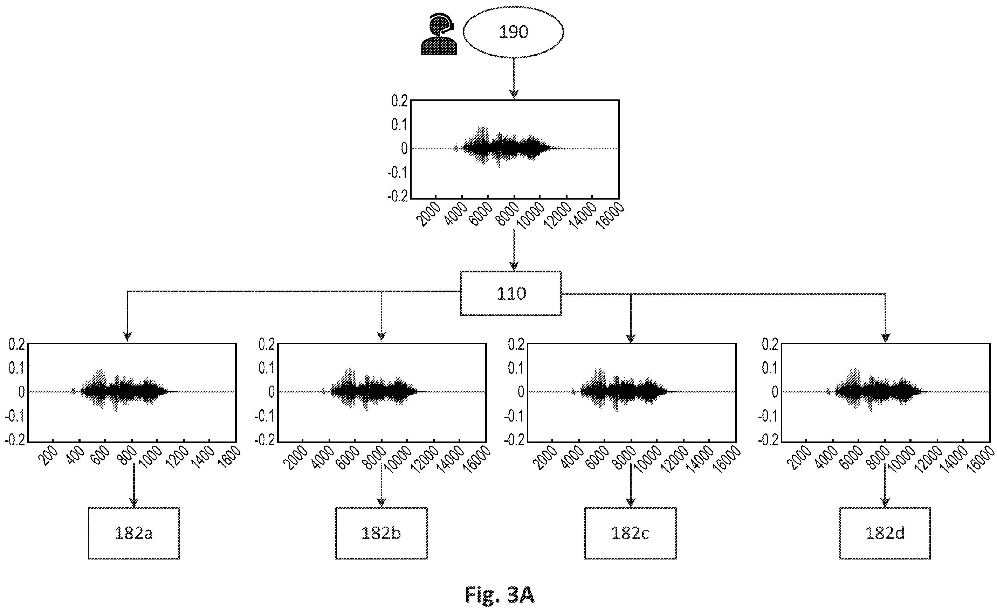

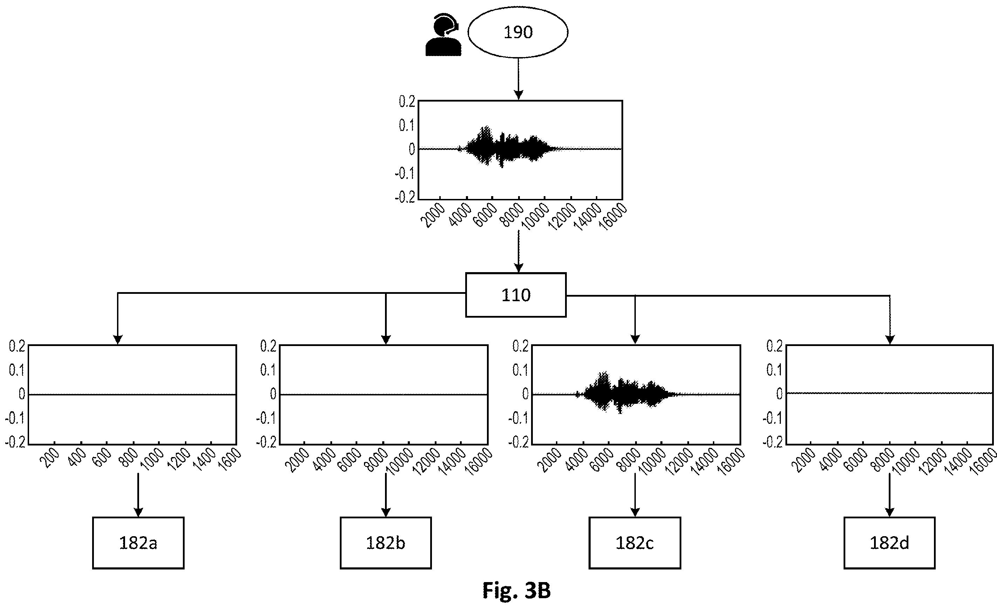

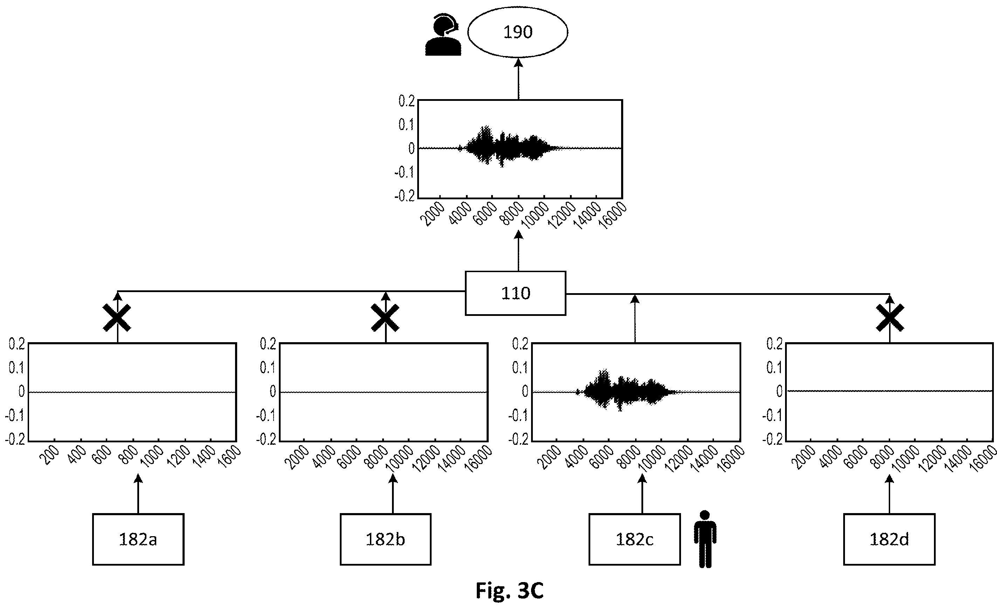

With reference to Figures 2 and 3, in response to an emergency event, the security system 100 may be configured to perform a method for improving responsiveness of a security system, which may comprise for example the following six steps.

Step 210: In response to an emergency event, the one or more emergency triggering mechanisms 180a-180d may generate and transmit an emergency signal to the control panel 110.

Step 220: Upon receiving the emergency signal, the control panel 110 may relay the emergency signal to the remote server 190 and establish a new two-way audio communication session with the remote server 190, e.g., a remote control center. Once the two-way audio communication session has been established, the control panel 110 may be able to send to and receive from the remote control center 190 audio data streams. For example, as shown in Figure 3A, the control panel 110 may receive an audio data stream from the remote control center 190, wherein the audio data stream may be generated based on an audio input from a human operator working at the remote control center 190.

Step 230: In parallel to step 220, the control panel 110 may also establish a new two-way audio communication session with each of the one or more audio devices 182a-182d. Once the two-way audio communication session has been established with all of the audio devices 182a-182d, the control panel 110 may be able to send to and receive from each of the audio devices 182a-182d audio data streams. For example, as shown in Figure 3A, the control panel 110 may relay the audio data stream received from the remote control center 190 to each of the four audio devices 182a-182d.

For either step 220 or step 230, it may take the control panel 110 a first period of time to complete the establishment of a new two-way audio communication session. In the example process shown in Figure 3A, the first period of time may be 5 seconds.

Step 240: Immediately after the establishment of the audio communication with every audio device 182a-182d, each of the audio devices 182a-182d may generate and transmit an audio data stream to the control panel 110.

Step 250: In response to the audio data stream received from each of the audio devices 182a-182d, the control panel 110 may identify the audio device at which human voice is detected. In an embodiment, to identify the audio device at which human voice is detected, the control panel 110 may first perform an analysis on the audio data stream received from each of the audio devices 182a-182d. Such an analysis may be conducted by means of for example a human voice recognition module which may be configured to enable recognition of human voice and/or human speech so as to differentiate human voice from other types of sound (e.g., background noise generated in the vicinity of the corresponding audio device). Such a human voice recognition module may be in the form of software stored in the memory unit 140 of the control panel 110. In an embodiment, the human voice recognition module may comprise one or more AI (artificial intelligent) speech recognition algorithms (e.g., Deep Speech 2 developed by Baidu Inc.) which are configured to efficiently and accurately identify human voice from an audio data stream.

For example, as shown in Figure 3B, the control panel 110 may command an AI based human voice recognition module to perform an analysis on each audio data stream received from the audio devices 182a-182d. After the analysis, the AI based human voice recognition module may successfully identify the audio device 182c at which human voice is detected. This may correspond to an example situation where a user of the security system 100 happens to be at the location where the identified audio device 180c is installed. The audio device 180c may first convert the audio data stream originated from the remote control center 190 and relayed by the control panel 110 into e.g., a voice message. In response to the voice message, the user may start to speak to the audio device 182c resulting in an audio data stream being generated and transmitted to the control panel 110.

The security system 110 may take a second period of time to collect all the audio data streams, analyze and identify the audio device 182a-182d at which human voice is detected, i.e. the tasks performed at step 240 and step 250. The second period of time may be for example 10 seconds.

In the case where none of the audio devices 182a-182d detects human voice within the second period of time, the security system 110 may take appropriate actions. For example, the control panel 110 may enable an additional period of time for human voice detection. Upon expiry of the additional period of time, the remote control center 190 may dispatch emergency personnel to visit the premise.

Step 260: Upon identifying the audio device (e.g., 182c shown in Figure 3C) at which human voice is detected, the control panel 110 may connect the identified audio device (e.g., 182c shown in Figure 3C) to the remote server 190 so as to enable two-way audio communication between the identified audio device (e.g., 182c shown in Figure 3C) and the remote server 190. In this case, the control panel 110 acts to bridge the two-way audio communication session established with the remote control center 190 and the two-way audio communication session established with the identified audio device (e.g., 182c shown in Figure 3C) such that a voice call can be setup between the identified audio device (e.g., 182c shown in Figure 3C) and the remote control center 190. In cases of two or more audio devices 182a-182d are identified, the control panel 110 may be configured to evaluate the quality of the audio data stream transmitted from each of the identified audio devices 182a-182d. The control panel 110 may further compare the qualities of the audio data streams to determine the audio device that generated the audio data stream having the best quality. Then, the control panel 110 may set the determined audio device as the identified audio device.

In an embodiment, the quality of an audio data stream may be indicated by the amplitude (e.g., maximum amplitude or root mean square (RMS) amplitude) of the audio data stream. The higher the amplitude of the audio data stream, the better the data quality is. In an embodiment, the quality of an audio data stream may be indicated by the signal to noise ratio (SNR) of the audio data stream. The higher the SNR of the audio data stream, the better the data quality is. In an embodiment, the quality of an audio data stream may be indicated by the amplitude as well as the SNR of the audio data stream. In such a case, to be considered as having a better data quality, an audio data stream should have a higher amplitude and a higher SNR.

In an embodiment, when connecting the identified audio device to the remote server 190, the control panel 110 may simultaneously terminate its connections with all the other audio devices (e.g., 182a, 182b and 182d shown in Figure 3C) at which no human voice is detected. Consequently, all the audio devices (e.g., 182a, 182b and 182d shown in Figure 3C) except the identified audio device (e.g., 182c shown in Figure 3C) are blocked from connecting to the remote server 190.

The security system 110 may take a third period of time to connect the identified audio device (e.g., 182c shown in Figure 3C) to the remote server 190, i.e. the task performed at step 260. The third period of time may be for example 3 seconds.

In contrast to the existing method (as described above) where the control panel connects to and performs a check on the audio devices in a sequential manner, the above-described method i.e. steps 210 to 260, allows all of the audio devices 182a-182d to be connected and checked in a parallel manner. Such a parallel operation removes the variation in response time of the security system 100 and thus increases the reliability of the security system 100. The total amount of time required for completing the entire process, described by steps 210 to 260, is the response time of the of the security system 100. Hence, the response time corresponds to the sum of the first, second and third periods of time. By way of example, for a first period of 5 seconds, a second period of 10 seconds, and a third period of 3 seconds, the response time of the security system 100 is 18 seconds, which is significantly shorter than the maximum response time of 72 seconds of existing security systems.

Note that, the above description is for illustration only and other embodiments and variations may be envisaged without departing from the scope of the invention, in accordance with the scope as defined in the claims.

## Claims

1. A security system (100) for monitoring premises, comprising:
a plurality of audio devices (182a-182d) installed at two or more different locations of the premises;
a control panel (110) communicatively coupled to each of the audio devices (182a-182d); and
a remote server (190) configured for two-way audio communication with the control panel (110) and each of the audio devices (182a-182d);
wherein in response to an emergency detected by or notified to the control panel (110), the system (100) is configured to:
establish (220), by the control panel (110), a two-way audio communication session with the remote server (190);
establish (230), by the control panel (110), a two-way audio communication session with each of the plurality of audio devices (182a-182d);
transmit (240), by each of the audio devices (182a-182d) to the control panel (110), an audio data stream;
identify (250), by the control panel (110), in response to the audio data stream from each of the audio devices (182a-182d), the audio device at which human voice is detected; and
connect (260), by the control panel (110), the identified audio device to the remote server (190) so as to enable two-way audio communication between the identified audio device and the remote server (190).

2. A security system (100) of claim 1, wherein the system (100) is configured to establish the two-way audio communication sessions respectively with the remote server (190) and each of the plurality of audio devices (182a-182d) in a parallel manner.

3. A security system (100) of claim 1 or 2, wherein the system (100) is further configured to block, by the control panel (110), all the audio devices (182a-182d) except the identified audio device from connecting to the remote server (190).

4. A security system (100) of any preceding claim, wherein when performing the identification step, the system (100) is further configured to perform an analysis on the audio data stream transmitted by each of the audio devices (182a-182d).

5. A security system (100) of claim 4, wherein the control panel (110) comprises a human voice recognition module configured to enable human voice recognition and/or human speech recognition so as to analyze the audio data stream.

6. A security system (100) of claim 5, wherein the human voice recognition module comprises an artificial intelligent speech recognition algorithm configured to improve efficiency and accuracy of human voice recognition.

7. A security system (100) of any preceding claim, wherein the system (100) is further configured to dispatch, by the remote server (190), emergency personnel to the premises when none of the audio devices detects human voice.

8. A method (200) of operating a security system (100) for monitoring premises, wherein the system (100) comprises:
a plurality of audio devices (182a-182d) installed at two or more different locations of the premises;
a control panel (110) communicatively coupled to each of the audio devices; and
a remote server (190) configured for two-way audio communication with the control panel (110) and each of the audio devices; and
wherein the method (200) comprises:
in response to an emergency detected by or notified to the control panel:
establishing (220), by the control panel, a two-way audio communication session with the remote server;
establishing (230), by the control panel, a two-way audio communication session with each of the plurality of audio devices;
transmitting (240), by each of the audio devices to the control panel, an audio data stream;
identifying (250), by the control panel, in response to the audio data stream from each of the audio devices, the audio device at which human voice is detected; and
connecting (260), by the control panel, the identified audio device to the remote server so as to enable two-way audio communication between the identified audio device and the remote server.

9. A method (200) of claim 8, wherein the step of establishing (230) the two-way audio communication session with the remote sever is performed in parallel with the step of establishing (230) the two-way audio communication session with each of the plurality of audio devices.

10. A method (200) of claim 8 or 9, further comprising blocking, by the control panel, all the audio devices except the identified audio device from connecting to the remote server.

11. A method (200) of any of claims 8 to 10, wherein the identification (250) step comprises performing an analysis on the audio data stream transmitted by each of the audio devices.

12. A method (200) of claim 11, wherein the analysis on the audio data stream transmitted by each of the audio devices is conducted by a human voice recognition module configured to enable human voice recognition.

13. A method (200) of any of claims 8 to 12, further comprising dispatching, by the remote server, emergency personnel to the premises when none of the audio devices detects human voice.

## Patentansprüche

1. Ein Sicherheitssystem (100) zum Überwachen von Räumlichkeiten, das Folgendes beinhaltet:
eine Vielzahl von Audiovorrichtungen (182a-182d), die an zwei oder mehr verschiedenen Orten der Räumlichkeiten installiert sind;
ein Bedienfeld (110), das kommunikativ mit jeder der Audiovorrichtungen (182a-182d) gekoppelt ist; und
einen entfernten Server (190), der für Zweiwege-Audiokommunikation mit dem Bedienfeld (110) und jeder der Audiovorrichtungen (182a-182d) konfiguriert ist;
wobei das System (100) als Reaktion auf einen Notfall, der von dem Bedienfeld (110) erkannt oder von diesem gemeldet wird, zu Folgendem konfiguriert ist:
Einrichten (220), durch das Bedienfeld (110), einer Zweiwege-Audiokommunikationssitzung mit dem entfernten Server (190);
Einrichten (230), durch das Bedienfeld (110), einer Zweiwege-Audiokommunikationssitzung mit jeder der Vielzahl von Audiovorrichtungen (182a-182d);
Übertragen (240), durch jede der Audiovorrichtungen (182a-182d) an das Bedienfeld (110), eines Audiodatenstroms;
Identifizieren (250), durch das Bedienfeld (110), als Reaktion auf den Audiodatenstrom von jeder der Audiovorrichtungen (182a-182d), der Audiovorrichtung, an der menschliche Stimme erkannt wird; und
Verbinden (260), durch das Bedienfeld (110), der identifizierten Audiovorrichtung mit dem entfernten Server (190), um Zweiwege-Audiokommunikation zwischen der identifizierten Audiovorrichtung und dem entfernten Server (190) zu ermöglichen.

2. Sicherheitssystem (100) gemäß Anspruch 1, wobei das System (100) konfiguriert ist, um die Zweiwege-Audiokommunikationssitzungen jeweils mit dem entfernten Server (190) und jeder der Vielzahl von Audiovorrichtungen (182a-182d) auf eine parallele Weise einzurichten.

3. Sicherheitssystem (100) gemäß Anspruch 1 oder 2, wobei das System (100) ferner konfiguriert ist, um, durch das Bedienfeld (110), alle Audiovorrichtungen (182a-182d) außer der identifizierten Audiovorrichtung daran zu hindern, sich mit dem entfernten Server (190) zu verbinden.

4. Sicherheitssystem (100) gemäß einem der vorhergehenden Ansprüche, wobei, wenn der Identifizierungsschritt durchgeführt wird, das System (100) ferner konfiguriert ist, um eine Analyse des Audiodatenstroms durchzuführen, der von jeder der Audiovorrichtungen (182a-182d) übertragen wird.

5. Sicherheitssystem (100) gemäß Anspruch 4, wobei das Bedienfeld (110) ein Modul zur Erkennung menschlicher Stimme beinhaltet, das konfiguriert ist, um eine Erkennung menschlicher Stimme und/oder eine Erkennung menschlicher Sprache zu ermöglichen, um so den Audiodatenstrom zu analysieren.

6. Sicherheitssystem (100) gemäß Anspruch 5, wobei das Modul zur Erkennung menschlicher Stimme einen Spracherkennungsalgorithmus mit künstlicher Intelligenz beinhaltet, der konfiguriert ist, um Effizienz und Genauigkeit der Erkennung menschlicher Stimme zu verbessern.

7. Sicherheitssystem (100) gemäß einem der vorhergehenden Ansprüche, wobei das System (100) ferner konfiguriert ist, um, durch den entfernten Server (190), Notfallpersonal zu den Räumlichkeiten zu entsenden, wenn keine der Audiovorrichtungen menschliche Stimme erkennt.

8. Ein Verfahren (200) zum Betreiben eines Sicherheitssystems (100) zum Überwachen von Räumlichkeiten, wobei das System (100) Folgendes beinhaltet:
eine Vielzahl von Audiovorrichtungen (182a-182d), die an zwei oder mehr verschiedenen Orten der Räumlichkeiten installiert sind;
ein Bedienfeld (110), das kommunikativ mit jeder der Audiovorrichtungen gekoppelt ist; und
einen entfernten Server (190), der für Zweiwege-Audiokommunikation mit dem Bedienfeld (110) und jeder der Audiovorrichtungen konfiguriert ist; und
wobei das Verfahren (200) Folgendes beinhaltet:
als Reaktion auf einen Notfall, der von dem Bedienfeld erkannt oder von diesem gemeldet wird:
Einrichten (220), durch das Bedienfeld, einer Zweiwege-Audiokommunikationssitzung mit dem entfernten Server;
Einrichten (230), durch das Bedienfeld, einer Zweiwege-Audiokommunikationssitzung mit jeder der Vielzahl von Audiovorrichtungen;
Übertragen (240), durch jede der Audiovorrichtungen an das Bedienfeld, eines Audiodatenstroms;
Identifizieren (250), durch das Bedienfeld, als Reaktion auf den Audiodatenstrom von jeder der Audiovorrichtungen, der Audiovorrichtung, an der menschliche Stimme erkannt wird; und
Verbinden (260), durch das Bedienfeld, der identifizierten Audiovorrichtung mit dem entfernten Server, um Zweiwege-Audiokommunikation zwischen der identifizierten Audiovorrichtung und dem entfernten Server zu ermöglichen.

9. Verfahren (200) gemäß Anspruch 8, wobei der Schritt des Einrichtens (230) der Zweiwege-Audiokommunikationssitzung mit dem entfernten Server parallel zu dem Schritt des Einrichtens (230) der Zweiwege-Audiokommunikationssitzung mit jeder der Vielzahl von Audiovorrichtungen durchgeführt wird.

10. Verfahren (200) gemäß Anspruch 8 oder 9, ferner beinhaltend das Blockieren, durch das Bedienfeld, aller Audiovorrichtungen außer der identifizierten Audiovorrichtung daran, sich mit dem entfernten Server zu verbinden.

11. Verfahren (200) gemäß einem der Ansprüche 8 bis 10, wobei der Identifizierungsschritt (250) das Durchführen einer Analyse des Audiodatenstroms beinhaltet, der von jeder der Audiovorrichtungen übertragen wird.

12. Verfahren (200) gemäß Anspruch 11, wobei die Analyse des Audiodatenstroms, der von jeder der Audiovorrichtungen übertragen wird, von einem Modul zur Erkennung menschlicher Stimme durchgeführt wird, das konfiguriert ist, um eine Erkennung menschlicher Stimme zu ermöglichen.

13. Verfahren (200) gemäß einem der Ansprüche 8 bis 12, ferner beinhaltend das Entsenden, durch den entfernten Server, von Notfallpersonal zu den Räumlichkeiten, wenn keine der Audiovorrichtungen menschliche Stimme erkennt.

## Revendications

1. Un système de sécurité (100) pour surveiller des locaux, comprenant :
une pluralité de dispositifs audio (182a à 182d) installés au niveau de deux emplacements différents ou plus des locaux ;
un panneau de commande (110) couplé en communication à chacun des dispositifs audio (182a à 182d) ; et
un serveur distant (190) configuré pour une communication audio bidirectionnelle avec le panneau de commande (110) et chacun des dispositifs audio (182a à 182d) ;
où, en réponse à une urgence détectée par ou notifiée au panneau de commande (110), le système (100) est configuré pour :
établir (220), par le panneau de commande (110), une session de communication audio bidirectionnelle avec le serveur distant (190) ;
établir (230), par le panneau de commande (110), une session de communication audio bidirectionnelle avec chaque dispositif de la pluralité de dispositifs audio (182a à 182d) ;
transmettre (240), par chacun des dispositifs audio (182a à 182d) au panneau de commande (110), un flux de données audio ;
identifier (250), par le panneau de commande (110), en réponse au flux de données audio provenant de chacun des dispositifs audio (182a à 182d), le dispositif audio au niveau duquel une voix humaine est détectée ; et
connecter (260), par le panneau de commande (110), le dispositif audio identifié au serveur distant (190) de façon à permettre une communication audio bidirectionnelle entre le dispositif audio identifié et le serveur distant (190).

2. Un système de sécurité (100) de la revendication 1, le système (100) étant configuré pour établir les sessions de communication audio bidirectionnelles respectivement avec le serveur distant (190) et chaque dispositif de la pluralité de dispositifs audio (182a à 182d) de manière parallèle.

3. Un système de sécurité (100) de la revendication 1 ou de la revendication 2, le système (100) étant en outre configuré pour empêcher, par le panneau de commande (110), tous les dispositifs audio (182a à 182d) à l'exception du dispositif audio identifié de se connecter au serveur distant (190).

4. Un système de sécurité (100) de n'importe quelle revendication précédente, où lorsqu'il réalise l'étape d'identification, le système (100) est en outre configuré pour réaliser une analyse sur le flux de données audio transmis par chacun des dispositifs audio (182a à 182d).

5. Un système de sécurité (100) de la revendication 4, où le panneau de commande (110) comprend un module de reconnaissance de voix humaine configuré pour permettre une reconnaissance de voix humaine et/ou une reconnaissance de parole humaine de façon à analyser le flux de données audio.

6. Un système de sécurité (100) de la revendication 5, où le module de reconnaissance de voix humaine comprend un algorithme de reconnaissance de parole à intelligence artificielle configuré pour améliorer l'efficacité et la précision de la reconnaissance de voix humaine.

7. Un système de sécurité (100) de n'importe quelle revendication précédente, le système (100) étant en outre configuré pour dépêcher, par le serveur distant (190), du personnel d'urgence aux locaux lorsqu'aucun des dispositifs audio ne détecte de voix humaine.

8. Un procédé (200) d'exploitation d'un système de sécurité (100) pour surveiller des locaux, où le système (100) comprend :
une pluralité de dispositifs audio (182a à 182d) installés au niveau de deux emplacements différents ou plus des locaux ;
un panneau de commande (110) couplé en communication à chacun des dispositifs audio ; et
un serveur distant (190) configuré pour une communication audio bidirectionnelle avec le panneau de commande (110) et chacun des dispositifs audio ; et
où le procédé (200) comprend :
en réponse à une urgence détectée par ou notifiée au panneau de commande :
l'établissement (220), par le panneau de commande, d'une session de communication audio bidirectionnelle avec le serveur distant ;
l'établissement (230), par le panneau de commande, d'une session de communication audio bidirectionnelle avec chaque dispositif de la pluralité de dispositifs audio ;
la transmission (240), par chacun des dispositifs audio au panneau de commande, d'un flux de données audio ;
l'identification (250), par le panneau de commande, en réponse au flux de données audio provenant de chacun des dispositifs audio, du dispositif audio au niveau duquel une voix humaine est détectée ; et
la connexion (260), par le panneau de commande, du dispositif audio identifié au serveur distant de façon à permettre une communication audio bidirectionnelle entre le dispositif audio identifié et le serveur distant.

9. Un procédé (200) de la revendication 8, où l'étape d'établissement (230) de la session de communication audio bidirectionnelle avec le serveur distant est réalisée en parallèle avec l'étape d'établissement (230) de la session de communication audio bidirectionnelle avec chaque dispositif de la pluralité de dispositifs audio.

10. Un procédé (200) de la revendication 8 ou de la revendication 9, comprenant en outre le fait d'empêcher, par le panneau de commande, tous les dispositifs audio à l'exception du dispositif audio identifié de se connecter au serveur distant.

11. Un procédé (200) de n'importe lesquelles des revendications 8 à 10, où l'étape d'identification (250) comprend la réalisation d'une analyse sur le flux de données audio transmis par chacun des dispositifs audio.

12. Un procédé (200) de la revendication 11, où l'analyse sur le flux de données audio transmis par chacun des dispositifs audio est menée par un module de reconnaissance de voix humaine configuré pour permettre une reconnaissance de voix humaine.

13. Un procédé (200) de n'importe lesquelles des revendications 8 à 12, comprenant en outre le fait de dépêcher, par le serveur distant, du personnel d'urgence aux locaux lorsqu'aucun des dispositifs audio ne détecte de voix humaine.
